# EUROPEAN PATENT APPLICATION

(11) **EP 1 840 813 A1**
(43) Date of publication of application: **03.10.2007**
(21) Application number: 07105013.2
(22) Date of filing: 27.03.2007
(51) Int. Cl.: G06Q 10/00, H04L 12/58, H04L 29/08

(54) **System and method for avoiding notification of unwanted information**

(30) Priority: 30.03.2006 JP 2006094305
(71) Applicant: NEC CORPORATION, Minato-ku, Tokyo 108-8001 (JP)
(72) Inventor: Takenouchi, Takao, Tokyo 108-8001 (JP); Ito, Naoko, Tokyo 108-8001 (JP)
(74) Representative: Vossius & Partner

(57) **Abstract**

A system for avoiding notification of unwanted information, which can reduce the chance of information becoming a subject of conversation that a communication partner does not want to know, during the communication with the partner. The system comprises an unwanted-information storage unit, a known information storage unit, a matching decision unit, and a warning output unit. The unwanted-information storage unit stores unwanted information items that a user does not want to know, in association with the users. The known information storage unit stores known information items that a user has already known, in association with the user. The matching decision unit finds a communication partner who knows an information item that a user does not want to know, on the basis of the known information items stored in the known information storage unit and the unwanted information items stored in the unwanted-information storage unit. The alarm output unit gives a warning to the user when the communication partner is found.

## Description

The present invention relates to a system and method for avoiding notification of unwanted information. More particularly, this invention relates to a system for avoiding notification of unwanted information, which can be used in messaging systems for use in the communication performed among users and controlled by computers.

Users often operate videotape recorders or hard disk drives (HDDs) for recording TV programs, and then later view the recorded TV programs. Assume that a user records a football game TV-broadcast live and later view the football game thus recorded. If the user is informed of the outcome of the game before viewing the game recorded, he or she will be disinterested. The user therefore demands that he or she should not be informed of anything he or she does not want to know. Attempts have been made to provide methods that meet this demand.

Any user may obtain information in various ways. He or she may get information through the conversation with friends, over the telephone, from messengers, from mails, by reading newspapers, watching television, and from information available on WWW. A technique has been required, not to give a user the information that he or she does not want to know, particularly in the communication implemented by computers.

Prior art to the present invention is a content control system proposed in Patent Document 1 (JP-A-2005-210501). This system discriminates the contents, such as news and mails provided on WWW, which relate to a TV program to be recorded, on the basis of the keyword of the TV program, and then controls the distribution of the contents thus discriminated.

In the conventional communication effected among users and controlled by computers (including the distribution of news), however, a user may, by chance, talk something that his or her communication partner does not want to know, as in the cases described below. Then, the partner will inevitably know it.
(1) A user speaks, by chance, of what the communication partner does not want to know, inevitably notifying it to the partner.
(2) A communication partner knows what a user does not want to know, and the communication partner talks, by chance, about it. Consequently, the user comes to know it.

The system disclosed in Patent Document 1 is not designed to solve such a problem. Nor is it configured to store the information items already known to a user, though it stores information items that the user does not want to know. That is, the system does not store both the information items the user does not want and the information items that are already known to the user as the system according to this invention does as will be described later. Thus, the system is not designed to solve both problems described in (1) and (2) by comparing the unwanted information items with the known information items.

The present invention has been made in view of the foregoing. An object of this invention is to reduce the chance of information becoming a subject of conversation that a communication partner does not want to know, during the communication performed among them and controlled by computers.

To achieve this object, according to the present invention, there is provided a system for avoiding notification of unwanted information, comprising: an unwanted-information storage means for storing unwanted information items that a user does not want to know, in association with the user; a known information storage means for storing known information items that a user has already known, in association with the user; and an alarm means for finding a communication partner who knows an information item that a user does not want to know, on the basis of the known information items stored in the known information storage means and the unwanted information items stored in the unwanted-information storage means, and for giving a warning to the user.

According to the present invention, there is provided a system for avoiding notification of unwanted information according to the present invention, comprising: an unwanted-information storage means for storing unwanted information items that a user does not want to know, in association with the user; a known information storage means for storing known information items that a user has already known, in association with the user; and an alarm means for finding a communication partner who declines to receive an information item that a user has, on the basis of the known information items stored in the known information storage means and the unwanted information items stored in the unwanted-information storage means, and for giving a warning to the user.

According to the present invention, there is provided a system for avoiding notification of unwanted information according to this invention, comprising: an unwanted-information storage means for storing unwanted information items that a user does not want to know, in association with the user; a known information storage means for storing known information items that a user has already known, in association with the user; and an alarm means for finding a communication partner who knows an information item that a user does not want to know, a communication partner who declines to receive an information item that the user has, on the basis of the known information items stored in the known information storage means and the unwanted information items stored in the unwanted-information storage means, and for giving a warning to the user.

In the present invention, the alarm means may have a matching decision means that performs a matching process on the known information items stored in the known information storage means and the unwanted information items stored in the unwanted-information storage means.

In the present invention, the system may further comprise a processing means for acquiring the known information items and the unwanted information items from an external system.

In the present invention, the external system may be a video-data processing system that has a video-data recording unit, and the processing means may have a means for adding information recorded by the video-data recording unit, as unwanted information, to the unwanted-information storage means in cooperation with the video-data processing system.

The external system may be a video-data processing system that has a video-data playback unit. The processing means may have a means for deleting information played back by the video-data playback unit from the unwanted information stored in the unwanted-information storage means and for adding the information to the known information storage means, in cooperation with the video-data processing system.

The external system may be a video-data processing system that has a video-data playback unit. The processing means may have a means for deleting information related to video data from the unwanted information stored in the unwanted-information storage means, in cooperation with the video-data processing system when the video data is deleted by the video-data deleting unit.

The external system may be a movie-ticket sales system. The processing means may have a means for adding the title of a movie for which a ticket has been purchased, as an unwanted information item, to the unwanted-information storage means, in cooperation with the movie-ticket sales system.

The external system may be a movie theater admission system that has a movie-viewing unit. In this case, the system may further comprise a means for deleting the title of a movie viewed at the movie-viewing unit from the unwanted information stored in the unwanted-information storage means and for adding the title of the movie, as unwanted information, to the known information storage means, in cooperation with the movie theater admission system.

In the present invention, the alarm means may have a means for giving the warning to the user when the user starts communication. The alarm means may have a means for notifying a user that the alarm given to the user is invalid when the alarm becomes invalid.

According to this invention, there is provided a system for avoiding notification of unwanted information according to the present invention, comprising: an unwanted-information storage means for storing unwanted information items that a user does not want to know, in association with the user; a known information analyzing means for analyzing known information items that a user has already known, on the basis of a communication content; and a communication interrupting means for determining communication content knowing an unwanted information item that a user does not want to know, on the basis of the unwanted information items stored in the unwanted-information storage means and the communication content analyzed by the known information analyzing means, and for interrupting the communication content.

The communication interrupting means may have a means for giving a warning to the user when the user starts the communication. Alternatively, the communication interrupting means may have a means for establishing no communication with the user. Still alternatively, the communication interrupting means may have a means for deleting the unwanted information from the communication content. Otherwise, the communication interrupting means may have a means for replacing the unwanted information items contained in the communication contents, with another information item. Instead, the communication interrupting means may have a means for prompting the user, who has received the alarm, to decide what action to take.

According to the present invention, there is provided a warning information decision apparatus, comprising: means for referring to an unwanted-information storage means storing unwanted information items that a user does not want to know, in association with the user and a known information storage means storing known information items that a user has already known, in association with the user, both the unwanted-information storage means and the known information storage means being provided outside the apparatus; and an alarm means for finding a communication partner who knows an information item that a user does not want to know, on the basis of the known information items stored in the known information storage means and the unwanted information items stored in the unwanted-information storage means, and for giving a warning to the user.

According to the present invention, there is provided a method for avoiding notification of unwanted information according to the present invention, comprising the steps of: storing unwanted information items that a user does not want to know, in association with the user, into an unwanted-information storage unit; storing known information items that a user has already known, in association with the user, into a known information storage unit; and finding a communication partner who knows an information item that a user does not want to know, on the basis of the known information items stored in the known information storage unit and the unwanted information items stored in the unwanted-information storage unit, and giving a warning to the user.

According to the present invention, there is provided a method for avoiding notification of unwanted information, comprising the steps of: storing unwanted information items that a user does not want to know, in association with the user, into an unwanted-information storage unit; storing known information items that a user has already known, in association with the user, into a known information storage unit; and finding a communication partner who declines to receive an information item that a user has, on the basis of the known information items stored in the known information storage unit and the unwanted information items stored in the unwanted-information storage unit, and giving a warning to the user.

According to the present invention, there is provided a method for avoiding notification of unwanted information, comprising the steps of: storing unwanted information items that a user does not want to know, in association with the user, into an unwanted-information storage unit; storing known information items that a user has already known, in association with the user, into a known information storage unit; and finding a communication partner who knows an information item that a user does not want to know, a communication partner who declines to receive an information item that the user has, on the basis of the known information items stored in the known information storage unit and the unwanted information items stored in the unwanted-information storage unit, and giving a warning to the user.

According to the present invention, there is provided a method for avoiding notification of unwanted information, comprising the steps of: storing unwanted information items that a user does not want to know, in association with the user, into an unwanted-information storage unit; analyzing known information items that a user has already known, on the basis of a communication content; and determining communication content knowing an unwanted information item that a user does not want to known, on the basis of the unwanted information items stored in the unwanted-information storage unit and the communication content analyzed, and interrupting the communication content.

According to the present invention, there is provided a warning information decision method, comprising the steps of the steps of: referring to unwanted-information storage means for storing unwanted information items that a user does not want to know in association with the user and known information storage means for storing known information items that a user has already known, in association with the user, both the unwanted-information storage means and the known information storage means being provided outside the apparatus; and finding a communication partner who knows an information item that a user does not want to know, on the basis of the known information items stored in the known information storage means and the unwanted information items stored in the unwanted-information storage means, and giving a warning to the user.

According to the present invention, there is provided a program for causing a computer to execute a method for avoiding notification of unwanted information, the method comprising the steps of: storing unwanted information items that a user does not want to know, in association with the user, into an unwanted-information storage unit; storing known information items that a user has already known, in association with the user, into a known information storage unit; and finding a communication partner who knows an information item that a user does not want to know, on the basis of the known information items stored in the known information storage unit and the unwanted information items stored in the unwanted-information storage unit, and giving a warning to the user.

According to the present invention, there is provided a program for causing a computer to execute a method for avoiding notification of unwanted information, the method comprising the steps of: storing unwanted information items that a user does not want to know, in association with the user, into an unwanted-information storage unit; storing known information items that a user has already known, in association with the user, into a known information storage unit; and finding a communication partner who declines to receive an information item that a user has, on the basis of the known information items stored in the known information storage unit and the unwanted information items stored in the unwanted-information storage unit, and giving a warning to the user.

According to the present invention, there is provided a program for causing a computer to execute a method for avoiding notification of unwanted information, the method comprising the steps of: storing unwanted information items that a user does not want to know, in association with the user, into an unwanted-information storage unit; storing known information items that a user has already known, in association wi th the user, into a known information storage unit; and finding a communication partner who knows an information item that a user does not want to know, a communication partner who declines to receive an information item that the user has, on the basis of the known information items stored in the known information storage unit and the unwanted information items stored in the unwanted-information storage unit, and giving a warning to the user.

According to the present invention, there is provided a program for causing a computer to execute a method for avoiding notification of unwanted information, the method comprising the steps of: storing unwanted information items that a user does not want to know, in association with the user, into an unwanted-information storage unit; analyzing known information items that a user has already known, on the basis of a communication content; and determining communication content knowing an unwanted information item that a user does not want to known, on the basis of the unwanted information items stored in the unwanted-information storage unit and the communication content analyzed, and interrupting the communication content.

According to the present invention, there is provided a warning information decision program for causing a computer to execute a method comprising the steps of: referring to unwanted-information storage means for storing unwanted information items that a user does not want to know in association with the user and known information storage means for storing known information items that a user has already known, in association with the user, both the unwanted-information storage means and the known information storage means being provided outside the apparatus; and finding a communication partner who knows an information item that a user does not want to know, on the basis of the known information items stored in the known information storage means and the unwanted information items stored in the unwanted-information storage means, and giving a warning to the user.

According to the present invention, any information item that a user does not want to know is registered. Hence, during the communication (including distribution of news) among users, an alarm can be given, showing that the information item should not be notified. This can reduce the chance of information becoming a subject of conversation that a communication partner does not want to know.

That is, according to the present invention, a user can register the information items he or she does not want to know and the information items he or she has known. A warning is generated if a communication partner knows an information item that the user does not want to know, or if the user knows an information item that the communication partner does not want to know. Therefore, during the communication, any user can know what the communication partner does not want to know and would not talk, by chance, about what the partner does not want to know. Also, during the communication, any user can know that the communication partner knows the information he or she does not want to know, and thus can reduce the chance of being given unwanted information.

### In the accompanying drawings:

FIG. 1 is a block diagram schematically showing a system for avoiding notification of unwanted information, according to a first embodiment of the present invention;
FIG. 2 is a block diagram schematically showing the system for avoiding notification of unwanted information, according to the first embodiment, the system having a configuration fit for use by several users;
FIG. 3 is a schematic flowchart explaining the operation of the first embodiment;
FIG. 4 is a block diagram schematically showing a system for avoiding notification of unwanted information, according to a second embodiment of the present invention;
FIG. 5 is a schematic flowchart explaining how the second embodiment operates to record video data;
FIG. 6 is a schematic flowchart explaining how the second embodiment operates to play back video data;
FIG. 7 is a schematic flowchart explaining how the second embodiment operates to delete video data;
FIG. 8 is a block diagram schematically showing a system for avoiding notification of unwanted information, according to a third embodiment of the present invention;
FIG. 9 is a schematic flowchart explaining how the third embodiment operates to enable the users to buy tickets;
FIG. 10 a schematic flowchart explaining how the third embodiment operates to enable the users to enj oy watching movies;
FIG. 11 is a block diagram schematically showing a system for avoiding notification of unwanted information, according to a fourth embodiment of the present invention;
FIG. 12 is a block diagram schematically showing a system for avoiding notification of unwanted information, according to a fifth embodiment of the present invention;
FIG. 13 is a block diagram schematically showing a system for avoiding notification of unwanted information, according to a sixth embodiment of the present invention;
FIG. 14 is a block diagram schematically showing a system for avoiding notification of unwanted information, according to a seventh embodiment of the present invention;
FIG. 15 is a block diagram schematically showing a system for avoiding notification of unwanted information, according to an eighth embodiment of the present invention;
FIG. 16 is a schematic flowchart explaining how the eighth embodiment operates;
FIG. 17 is a block diagram schematically showing a system for avoiding notification of unwanted information, according to a ninth embodiment of the present invention;
FIG. 18 is a block diagram schematically showing a system for avoiding notification of unwanted information, according to a tenth embodiment of the present invention;
FIG. 19 is a schematic flowchart explaining how the tenth embodiment operates;
FIG. 20 is a block diagram schematically showing a system for avoiding notification of unwanted information, according to an eleventh embodiment of the present invention; and
FIG. 21 is a schematic flowchart explaining how the eleventh embodiment operates.

Various embodiments of a system and method for avoiding notification of unwanted information according to the present invention will be described in detail with reference to the accompanying drawings.

### [First Embodiment]

The first embodiment of the present invention will be described. This embodiment is a system for avoiding notification of unwanted information according to the present invention is applied to a messaging system. The term "unwanted information" means any information item that a user does not want to know. The term "known information," which will be used herein, means any information item that is already known to a user.

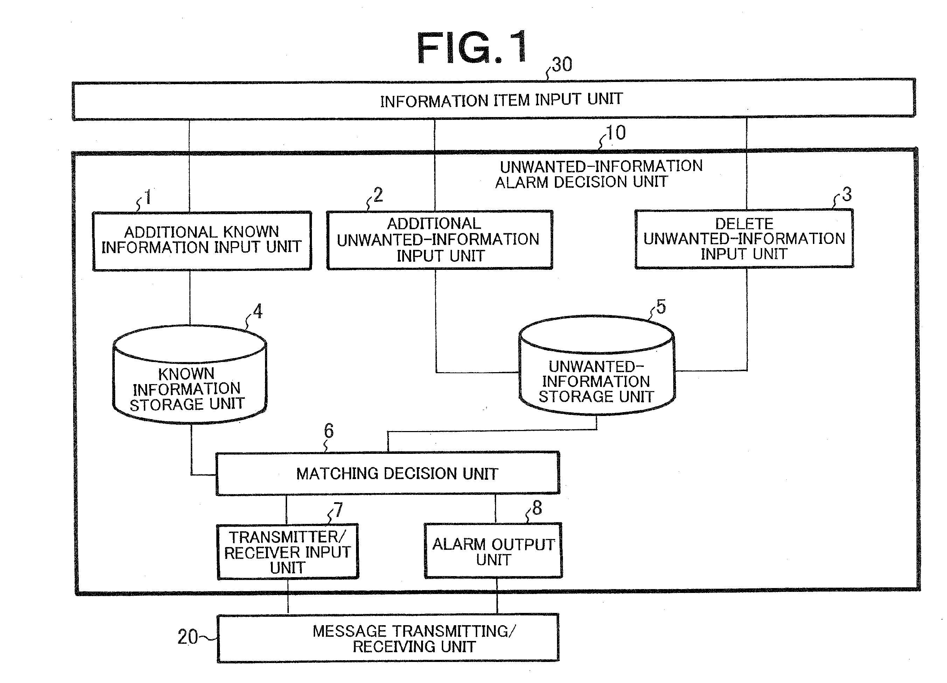

FIG. 1 shows the configuration of this embodiment. The system for avoiding notification of unwanted information according to this embodiment, comprises an unwanted-information alarm decision unit 10, a message transmitting/receiving unit 20, and an information item input unit 30. The unwanted-information alarm decision unit 10 is the main component of the present invention. The message transmitting/receiving unit 20 and the information item input unit 30 are devices peripheral to the unwanted-information alarm decision unit 10.

The unwanted-information alarm decision unit 10 comprises a known information storage unit 4, an unwanted-information storage unit 5, an additional known information input unit 1, an additional unwanted-information input unit 2, an delete unwanted-information input unit 3, a matching decision unit 6, a transmitter/reoeiver input unit 7, and a warning output unit 8.

The known information storage unit 4 stores no data unit or at least one data unit of a user identifier and user's known information identified by the user identifier. Further, the known information storage unit 4 stores no data unit or at least one data unit of a user identifier and user's unwanted information identified by the user identifier.

The additional known information input unit 1 receives, as an input, the user identifier and the user's known information identified by the user identifier, from the information item input unit 30. The unit 1 then registers a data unit composed of the user identifier and known information in the known information storage unit 4.

The additional unwanted-information input unit 2 receives, as an input, the user identifier and the user's unwanted information identified by the user identifier, from the information item input unit 30. The unit 2 then registers the data unit composed of the user identifier and unwanted information in the unwanted-information storage unit 5.

The delete unwanted-information input unit 3 receives, as an input, the user identifier and the unwanted information identified by the user identifier that the user wants to delete, from the information item input unit 30. The unit 3 retrieves the data unit composed of the user identifier and unwanted information from the unwanted-information storage unit 5. If the unit of the user identifier and unwanted information is retrieved, the unit 3 deletes the data unit composed of the user identifier and unwanted information from the unwanted-information storage unit 5.

The known information storage unit 4 stores the information items known to all users. The unwanted-information storage unit 5 stores the information items that all users do not want to know. The known information storage unit 4 can acquire any information known to each User By using the user identifier as a key. The unwanted-information storage unit 5 can acquire any information each user does not want to know, by using the user identifier as a key.

The transmitter/receiver input unit 7 receives the user identifier of a message sender and the user identifier of a message receiver from the message transmitting/receiving unit 20. The unit 7 transfers the identifiers to the matching decision unit 6.

The matching decision unit 6 receives the user identifier of the message sender and the user identifier of the message receiver. Using these user identifiers as keys, the unit 6 retrieves, from the known information storage unit 4, the information items that the message sender and the message receiver have already known and the information items that they do not want to know. From the received known information and unwanted information, the matching decision unit 6 performs matching, determining (A) whether the information items stored in the unwanted-information storage unit 5, which the message sender does not want to know, include any item identical to an information item stored the known information storage unit 4, which the message receiver knows, and determining (B) whether the information items stored in the known information storage unit 4, which the message sender knows, include any item identical to an information item stored in the unwanted-information storage unit 5, which the message receiver does not want to know. If the decision A or B thus made is affirmative, the information item found identical and the data showing which decision, A or B, is affirmative, are transferred from the unit 6 to the alarm output unit 8.

The alarm output unit 8 receives the information item from the matching decision unit 6. If the information item is one found identical in matching determination A, the unit 8 generates a warning message indicating that the message receiver knows that the information item he or she does not want to know is known to the message sender. If information item is one found identical in matching determination B, the unit 8 generates a warning message indicating that the message sender knows the information item that the message receiver does not want to know. The alarm message thus generated is output from the unit 8 to the message transmitting/receiving unit 20.

The message transmitting/receiving unit 20 receives the alarm message and displays this message.

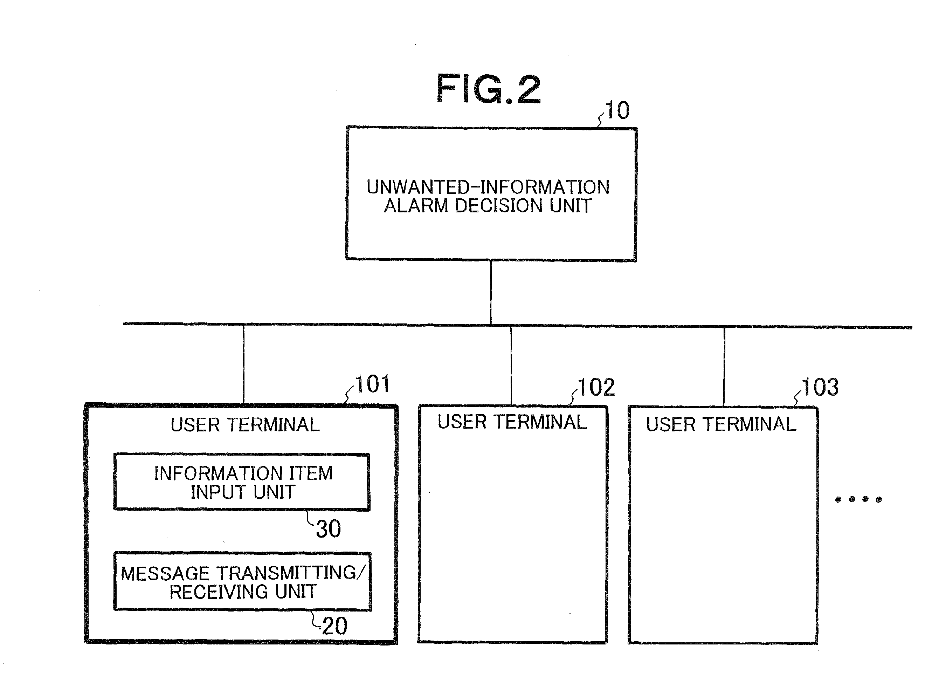

FIG. 2 is a block diagram schematically showing the system for avoiding notification of unwanted information, which is used as the message system shown in FIG. 1. This system has a configuration fit for use by several users. The user terminals 101, 102 and 103 have an information item input unit 30 and a message transmitting/receiving unit 20 each. The information item input unit 30 and message transmitting/receiving unit 20 of each of the user terminals 101, 102 and 103 are connected to one unwanted-information alarm decision unit 10 via a communication line. Here, the message exchange between two user terminals will be explained. Nonetheless, the messaging system may of course be one in which messages are exchanged among a plurality of user terminals 101, 102 and 103.

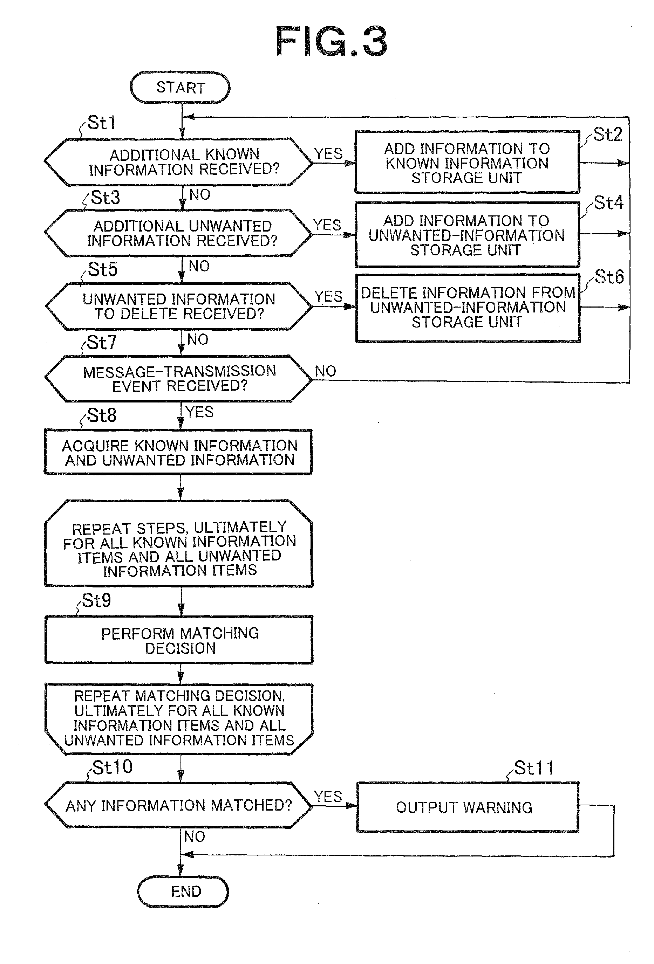

How the present embodiment operates will be explained with reference to the flowchart of FIG. 3.

Undesirable situations that may take place during the communication, where messages are exchanged among several users, are: (1) a user speaks, by chance, of what a communication partner does not want to know, inevitably teaching it to the partner; and (2) what a user does not want to know is known to his or her communication partner, and the partner talks, by chance, about it. Consequently, the user comes to know it.

To prevent these situations, the present embodiment operates as will be described below.

First, the unwanted-information alarm decision unit 10 determines whether the known information that should be added for the message sender or the message receiver has been received from the information item input unit 30 through the additional known information input unit 1 (Step St1). If the known information to add has been received (if YES), the unwanted-information alarm decision unit 10 registers this known information in the known information storage unit 4 (Step St2) . Then, the operation returns to Step St1.

If the known information to be added has not been received in Step St1 (NO), the unwanted-information alarm decision unit 10 determines whether the unwanted information that should be added for the message sender or the message receiver has been received from the information item input unit 30 through the additional unwanted-information input unit 2 (Step St3) . If the unwanted information has been received (if YES), the unwanted-information alarm decision unit 10 registers this unwanted information in the unwanted-information storage unit 5 (Step St4). The operation then returns to Step St1.

If the unwanted information has not been received in Step St3 (NO), the unwanted-information alarm decision unit 10 determines whether the unwanted information that should be deleted for the message sender or the message receiver has been received from the unwanted-information alarm decision unit 10 through the delete unwanted-information input unit 3 (Step St5). If the unwanted information to be deleted has been received (if YES), the unwanted-information alarm decision unit 10 deletes the unwanted information from the unwanted-information storage unit 5 (Step St6). The operation then returns to Step St1.

If the unwanted information to be deleted has not been received in Step St5 (NO), the unwanted-information alarm decision unit 10 determines whether the message sender has operated the message transmitting/receiving unit 20 and whether a message-transmission event sent by the message sender has been received (Step St7). If the message-transmission event has not been received (if NO), the operation returns to Step St1.

If a message-transmission event sent by the message sender has been received in Step St7 (YES), the unwanted-information alarm decision unit 10 acquires the information items known to the message sender and message receiver, from the known information storage unit 4, and the unwanted information items from the unwanted-information storage unit 5 (Step St8). The matching decision unit 6 makes the matching decisions (A) and (B) (Step St9). That is, it determines (A) whether the information items stored in the unwanted-information storage unit 5 for the message sender include any item identical to an information item stored in the known information storage unit 4 for the message receiver, and (B) whether the information items stored in the known information storage unit 4 for the message sender include any item identical to an information item stored in the unwanted-information storage unit 5 for the message receiver. This matching decision is repeated, ultimately for all known information items and all unwanted information items.

Next, the unwanted-information alarm decision unit 10 determines whether any information should be matched, from the matching decision (Step St10). If there is such information, the alarm output unit 8 outputs a warning to both the message sender and the message receiver through the message transmitting/reoeiving unit 20 (Step St11).

That is, if there is an information item that accords with the matching decision (A), a warning is sent to the message sender, informing the message sender that the message receiver knows the information item that the message sender does not want to know, when the message sender transmits the message. A similar alarm is sent to the message receiver when the message receiver receives the message. The possibility of the undesirable situation (1) is thereby decreased.

If there is an information item that accords with the matching decision (B), the alarm is sent to the message sender, informing the message sender that the message sender knows the information item that the message receiver does not want to know, when the message sender transmits the message. A similar alarm is sent to the message receiver when the message receiver receives the message. The possibility of the undesirable situation (2) is thereby decreased.

The operation described above will be explained in greater detail, on the assumption that messages are exchanged between User A and User B.

Assume in this example that User A records "football game X" and plans to view "football game X" later, and that User A therefore does not want to know the outcome of "football game X". Assume that User B has already viewed "football game X" and therefore knows the outcome of the game. Note that User A and User B have user identifier User A and user identifier User B, respectively.

First, how the operation goes when User A sends a message to User B.

Since User A does not want to know the outcome of "football game X", User A transmits "football game X" and the user identifier User A via the information item input unit 30 to the additional unwanted-information input unit 2 of the unwanted-information alarm decision unit 10. Since User A has no known information to add, no information is transmitted to the additional known information input unit 1. Since User A has no unwanted information to delete, no information is transmitted to the delete unwanted-information input unit 3.

Since User B knows the outcome of "football game X", User B transmits football game X", and the user identifier User B to the additional known information input unit 1 via the information item input unit 30. User B has no unwanted information to add. Therefore, no information is transmitted to the additional unwanted-information input unit 2. Since User B has no unwanted information to delete, no information is transmitted to the delete unwanted-information input unit 3.

The unwanted-information alarm decision unit 10 determines whether the additional known information input unit 1 has received from User A the known information that should be added (Step St1). If "football game X" has been received from User B, as known information that should be added (YES), "football game X" received and User B are added, as a data unit, to the known information storage unit 4 (Step St3). In this case, no known information to add has been received from User A (NO), no known information is added to the known information storage unit 4.

Then, the unwanted-information alarm decision unit 10 determines whether the additional unwanted-information input unit 2 has received any unwanted information to be added (Step St3). Since the additional unwanted-information input unit 2 has received such unwanted information from User A (YES), a data unit composed of "football game X" received and User A is added, as a data unit, to the unwanted-information storage unit 5 (Step St4). In this case, no unwanted information has been received from User B (NO). Hence, no unwanted information is added to the unwanted-information storage unit 5.

Next, the unwanted-information alarm decision unit 10 determines whether the delete unwanted-information input unit 3 has received any unwanted information to delete (Step St3). Since unwanted information has been received from neither User A nor User B (NO), no unwanted information is deleted from the unwanted-information storage unit 5.

The unwanted-information alarm decision unit 10 then determines whether a message-transmission event has been received via the message transmitting/receiving unit 20 (Step St7).

User A therefore opens a message-transmission menu for User B, on the message transmitting/receiving unit 20, in order to transmit a message to User B. The message transmitting/receiving unit 20 gives the transmitter/receiver input unit 7 the data showing that the message sender's identifier is User A and the message receiver's identifier is User B. The unit 20 then waits for an output from the alarm output unit 8. At this time, the transmitter/receiver input unit 7 receives the data showing that the message sender's identifier is User A and the message receiver's identifier is User B. The unit 7 gives the matching decision unit 6 the data showing that the message sender and the message receiver are identified by identifiers User A and User B, respectively.

Then, the unwanted-information alarm decision unit 10 determines that a message-transmission event has been received from User A (YES in Step St7). The matching decision unit 6 searches the known information storage unit 4 for the information items known to the users A and B, and the unwanted-information storage unit 5 for the information items that users A and B do not want to know (Step St8). At this point, User A, who is the message sender, is used as key for searching the unwanted-information storage unit 5. In this case, "football game X" is obtained as unwanted information of User A. User A, who is the message sender, is used as a key for searching the known information storage unit 4. In this case, the known information that is known to User A is not acquired. User B, who is the message receiver, is used as a key for searching the unwanted-information storage unit 5. In this case, the unwanted information of User B is not acquired. Further, the known information storage unit 4 is searched by using, as a key, User B, i.e., message receiver. In this case, "football game X" is obtained as known information of User B.

Next, in the unwanted-information alarm decision unit 10, the matching decision unit 6 compares all unwanted information items for User A, i.e., message sender, with all information items known to User B, i.e., message receiver to determine whether any unwanted information item is identical to any known information item (Steps St9 and St10). In this case, the unit 10 determines that "football game X" is the identical information item. Further, the unit 6 compares all information items known to User A, i.e., message sender, with all unwanted information items for User B, i.e., message receiver (Steps St9 and St10). In this case, the unit 10 determines that no information items known to User A are identical.

As a result, in the unwanted-information alarm decision unit 10, the matching decision unit 6 outputs data to the alarm output unit 8 (Step St11). This data shows that "football game X" is an unwanted information item to User A, i.e., message sender, and is an information item known to User B, i.e., message receiver.

Then, the alarm output unit 8 receives the data from the matching decision unit 6. The alarm output unit 8 outputs a warning message "User B knows football game X" for User A, to the message transmitting/receiving unit 20. This is because "football game X" is an unwanted information item to User A, i.e., message sender, and is an information item known to User B, i.e., message receiver. The message transmitting/receiving unit 20 receives the alarm message and displays a warning message "User B knows about football game X" in the message-transmission menu for data transmission from User A to User B.

How the present embodiment operates to enable User B to send a message to User A will be explained, mainly as contrasted to the case where User A sends a message to User B.

In this instance, Steps St1 to St6 are performed in the same way as in the case where User A sends a message to User B.

In order to transmit a message to User A, User B opens the message-transmission menu for User A displayed on the message transmitting/receiving unit 20. The unit 20 supplies the data showing that the message sender is User B and the message receiver is User A, to the transmitter/receiver input unit 7, and then waits for any data coming from the alarm output unit 8. The transmitter/receiver input unit 7 receives the data input showing that the message sender is User B and the message receiver is User A and transfers this data to the matching decision unit 6.

Then, the unwanted-information alarm decision unit 10 determines that a message-transmission event has been received from User B (YES in Step St7). The matching decision unit 6 searches the known information storage unit 4 for the information items known to the users A and B, and the unwanted-information storage unit 5 for the information items that users A and B do not want to know (Step St8), as in the case where User A sends a message to User B.

Next, in the unwanted-information alarm decision unit 10, the matching decision unit 6 compares all unwanted information items for User B, i.e., message sender, with all information items known to User A, i.e., message receiver, to determine whether any unwanted information item is identical to any known information item (Steps St9 and St10). Assume that none of the unwanted information items is identical to any one of the known information items. Then, the unit 6 compares all information items known to User B, i.e., message sender, with all unwanted information items for User A, i.e., message receiver. Assume that "football game X" is found identical.

As a result, in the unwanted-information alarm decision unit 10, the matching decision unit 6 supplies the alarm output unit 8 with the data showing that "football game X" is an information item that User A, i.e., message receiver, does not want and an information item that User B, i.e., message sender, knows (Step St11).

The alarm output unit 8 receives the data from the matching decision unit 6. Since "football game X" is an information item that User A, i.e., message receiver, does not want and the User B, i.e., message sender, knows, the alarm output unit 8 outputs a warning message "User A does not want to know anything about football game X", to the message transmitting/receiving unit 20. The message transmitting/receiving unit 20 receives this alarm message. The message transmitting/receiving unit 20 displays the message "User A does not want to know anything about football game X" in the message-transmission menu for transmission from User B to User A.

The present embodiment is therefore advantageous in the following respects:
(1) In the communication between users, one user can know what another user does not want to know, and can be prevented from talking, by chance, about what the other user does not want to know.
(2) In the communication between users, one user can know that another user knows the information that he or she does not want to know. This reduces the chance that he or she knows the information he or she does not want to know.

### [Second Embodiment]

Now, the second embodiment of the present invention will be described.

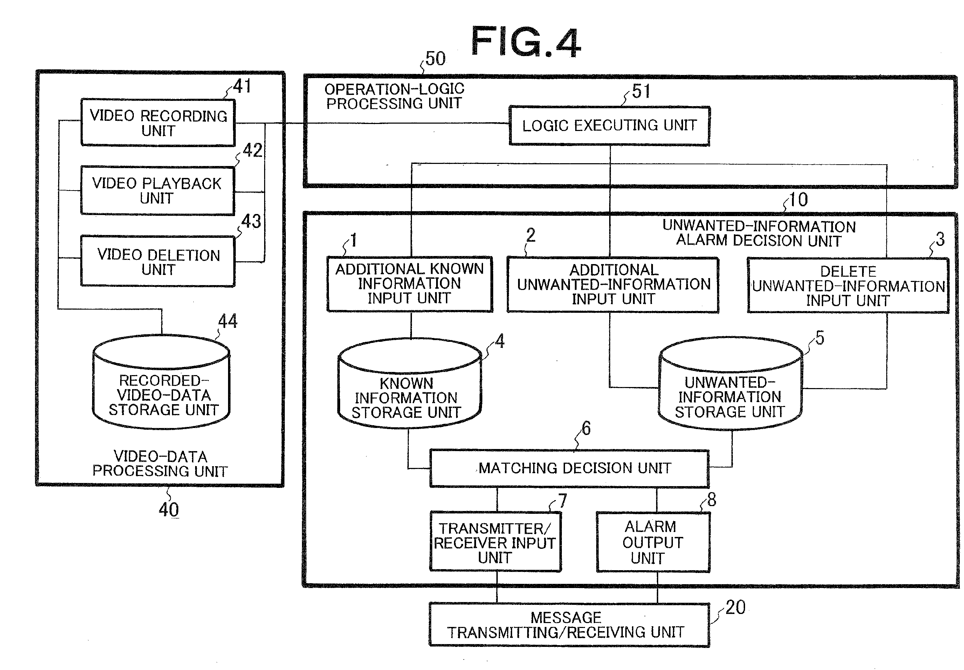

A system for avoiding notification of unwanted information, according to the present embodiment, is a combination composed of the configuration of the first embodiment described above and an apparatus that can record and play back video data such as TV programs. This system is designed to add or delete known information or unwanted information automatically. As shown in FIG. 4, a video-data processing unit 40 and an operation-logic process unit 50 may be used in place of the information item input unit 30 shown in FIG. 1.

The operation-logic process unit 50 has a logic executing unit 51. The logic executing unit 51 receives an event externally supplied. The unit 51 performs a logic operation on the event received, generating information that will be transferred to the additional known information input unit 1, the additional unwanted-information input unit 2, or the delete unwanted-information input unit 3. The video-data processing unit 40 comprises a video recording unit 41, a video playback unit 42, a video deletion unit 43, and a recorded-video-data storage unit 44. The logic of the operation-logic process unit 50 is described as "event → logic".

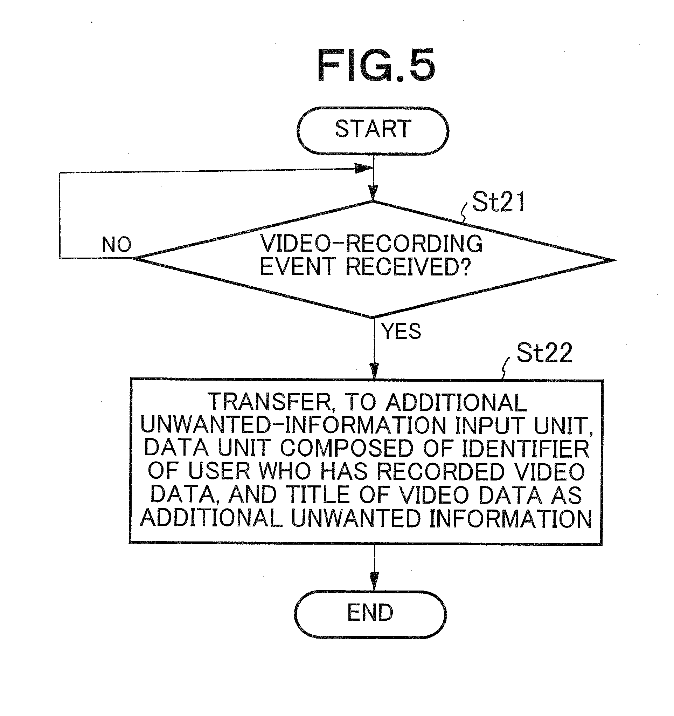

How the operation-logic process unit 50 performs a logic process will be explained, with reference to FIGS. 5 to 7.

First, as shown in FIG. 5, the operation-logic process unit 50 receives a video-recording event (Step St21). The unit 50 performs a logic process on the event, transferring, to the additional unwanted-information input unit 2, a data unit composed of the identifier of the user who has recorded video data and the title of the video data recorded (Step St22).

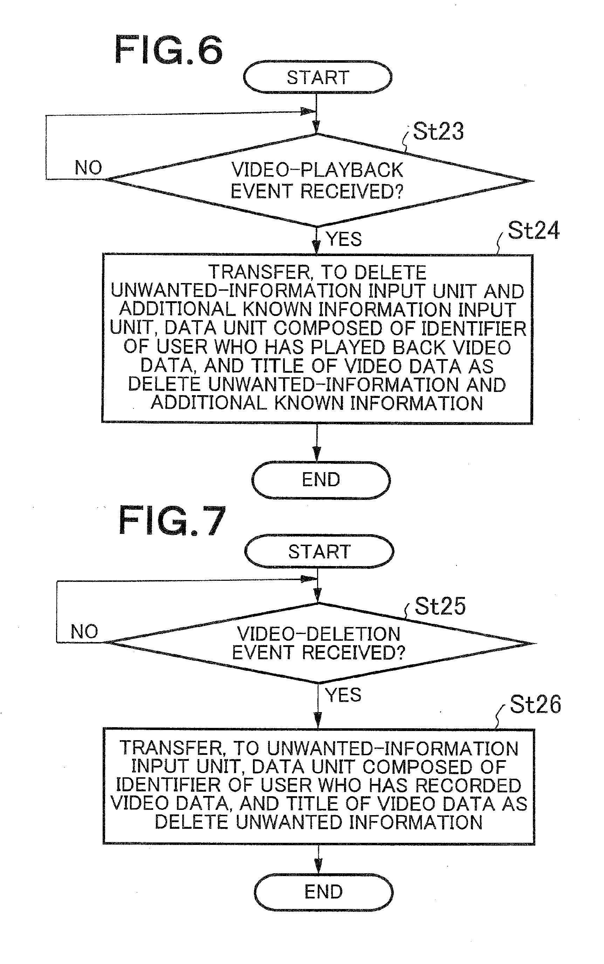

As shown in FIG. 6, the operation-logic process unit 50 receives a video-playback event (Step St23). The unit 50 then performs a logic process on this event, transferring, to the delete unwanted-information input unit 3 and additional known information input unit 1, a data unit composed of the identifier of the user who has played back video data and the title of the video data played back (Step St24).

Further, as shown in FIG. 7, the operation-logic process unit 50 receives a video-deletion event (Step St25). The unit 50 then performs a logic process on this event, transferring, to the delete unwanted-information input unit 3, a data unit composed of the identifier of the user who has recorded video data and the title of the video data recorded (Step St26).

The video recording unit 41 has the function of enabling the user to record video data such as a TV program, and storing the title of the video data and the video data recorded, in the recorded-video-data storage unit 44. The video recording unit 41 transfers a video-recording event to the logic executing unit 51 if any video data has been recorded.

The video playback unit 42 has the function of playing back the recorded data stored in the recorded-video-data storage unit 44. The video playback unit 42 transfers a video-playback event to the logic executing unit 51 if any video data has been played back.

The video deletion unit 43 has the function of deleting the data recorded in the recorded-video-data storage unit 44. The video deletion unit 43 transfers a video-deletion event to the logic executing unit 51 if any video data has been deleted.

Here, how the present embodiment operates will be explained.

First, User A records "Drama X, Episode 1," utilizing the video recording unit 41. Then, the video recording unit 41 transfers a video-record event to the logic executing unit 51, the event showing that the identifier of User A, who has recorded the video program, is User A and that the title of the video program is "Drama X, Episode 1". The logic executing unit 51 receives the video-record event and transfers a data unit composed of User A, and "Drama X, Episode 1" to the additional unwanted-information input unit 2. The additional unwanted-information input unit 2 adds the data unit composed of User A and "Drama X, Episode 1" to the unwanted-information storage unit 5.

Next, User A plays back "Drama X, Episode 1" recorded, utilizing the video playback unit 42. The video playback unit 42 transfers a playback event to the logic executing unit 51, the playback event showing that User A has played back "Drama X, Episode 1" recorded. The logic executing unit 51 then transfers a data unit composed of User A and "Drama X, Episode 1" to the delete unwanted-information input unit 3 and the additional known information input unit 1. The delete unwanted-information input unit 3 deletes the data unit composed of User A and "Drama X, Episode 1" from the unwanted-information storage unit 5. The data unit composed of User A and "Drama X, Episode 1" and received from the known information storage unit 4 is added to the additional known information input unit 1.

Thus, "Drama X, Episode 1," for example, is automatically added to the unwanted-information storage unit 5 when the user records "Drama X, Episode 1." Therefore, the user has a smaller chance of knowing the outcome of "Drama X, Episode 1" until he or she plays back this recorded program. Since this program is automatically added or deleted to or from the known information storage unit 4 and the unwanted-information storage unit 5, as the user plays it back, records it or deletes it, the user need not perform any manual operation to add or delete "Drama X, Episode 1" to or from the known information storage unit 4 and the unwanted-information storage unit 5.

### [Third Embodiment]

Next, the third embodiment of the present invention will be described.

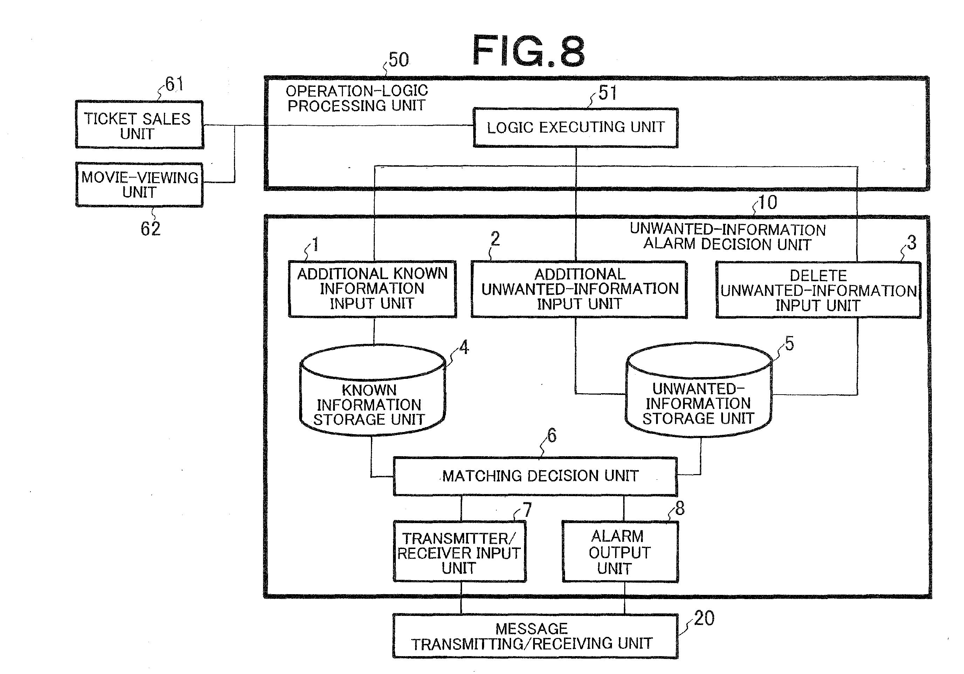

A system for avoiding notification of unwanted information according to this embodiment, is a system composed of the configuration of the first embodiment described above and a movie-ticket sales system or a movie theater admission system. This system can automatically add and delete known information and unwanted information. As shown in FIG. 8, in the third embodiment, a ticket sales unit 61 and a movie-viewing unit 62 are used in place of the video-data processing unit 41 shown in FIG. 4.

The ticket sales unit 61 has the function of transferring, to the logic executing unit 51, a ticket-sales event composed of the user identifier of a person who has purchased a ticket and the title of the movie. The movie-viewing unit 62 has the function of transferring, to the logic executing unit 51, a movie-viewing event composed of the user identifier of a person who has viewed the movie and the title of the movie.

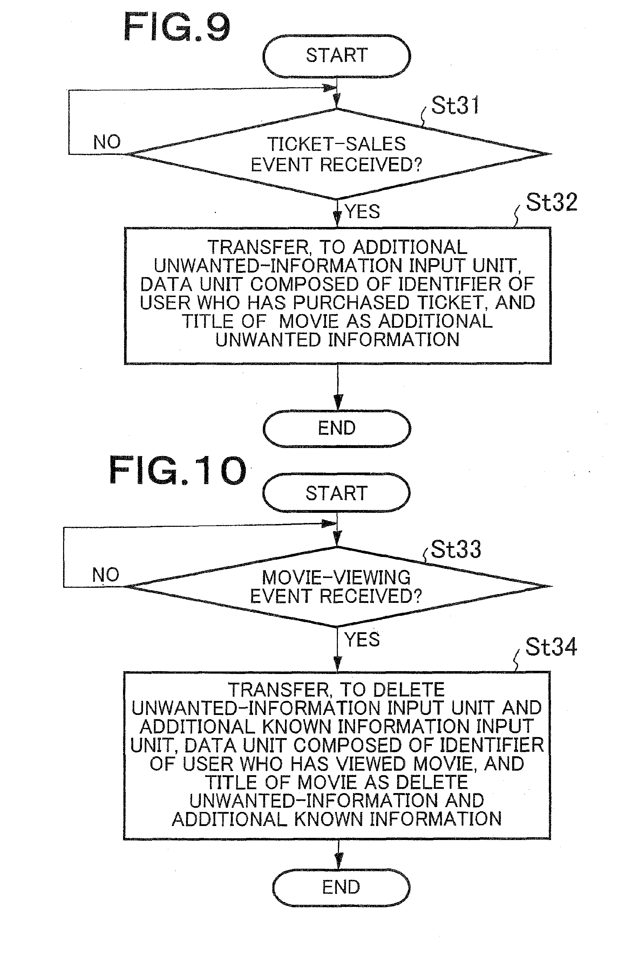

The logic operation of the operation-logic process unit 50 according to this embodiment performs will be explained with reference to FIGS. 9 and 10.

As shown in FIG. 5, the operation-logic process unit 50 receives a ticket-purchase event (Step St31). The unit 50 performs a logic process on the event. That is, the unit 50 transfers a data unit composed of the identifier of the user who has purchased the ticket and the title of the movie, to the additional unwanted-information input unit 2 (Step St32).

As shown in FIG. 5, too, the operation-logic process unit 50 receives a movie-viewing event (Step St33). The unit 50 performs a logic process on this event, transferring a data unit composed of the identifier of the user who has viewed the movie and the tile of the movie, to the delete unwanted-information input unit 3 and the additional known information input unit 1 (Step St34).

Thus, when the User Buys a ticket for the movie titled "X", "X" is automatically added to the unwanted-information storage unit 5. Therefore, the user has a smaller chance of knowing the outcome of the movie until he or she views the movie. Since the video data representing this movie is automatically added to or deleted from the known information storage unit 4 and the unwanted-information storage unit 5, as the user buys the ticket and as he or she watches the movie, the user need not perform any manual operation to add or delete "X" to or from the known information storage unit 4 and the unwanted-information storage unit 5.

### [Fourth Embodiment]

Next, the fourth embodiment of the present invention will be described.

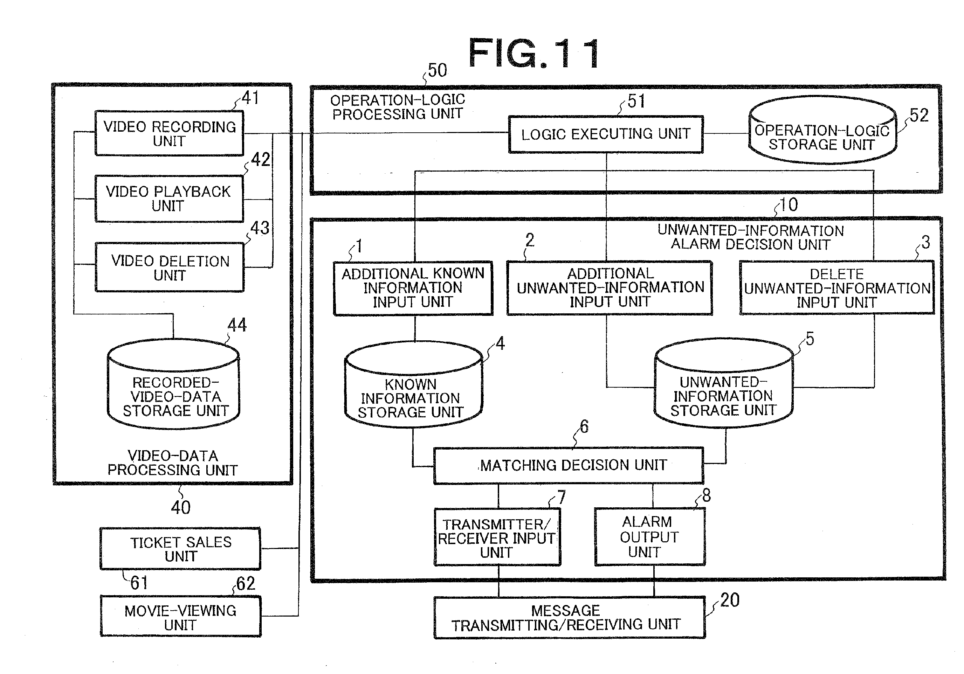

A system for avoiding notification of unwanted information according to this embodiment comprises a video-data processing unit 40 of the type used in the second embodiment, a ticket sales unit 61 of the type used in the third embodiment, and a movie-viewing unit 62 of the type used in the third embodiment. This system is configured to execute events received from one or more external systems and process known information and unwanted information, by switching logics, thereby to link the unwanted-information alarm decision unit 10 to the external system or systems. As shown in FIG. 11, this embodiment may have an operation-logic storage unit 52 provided in the operation-logic process unit 50 having a configuration shown in FIG. 4.

The logic executing unit 51 receives an event from an external system. Using this event as a key, the unit 51 acquires a logic to execute, from the operation-logic storage unit 52. The operation-logic storage unit 52 has the function of retrieving the logic, by using the even as a key. The logic of the operation-logic storage unit 52 is described as "event → logic". The logic executing unit 51 executes the logic acquired from the operation-logic storage unit 52. As a result, the logic executing unit 51 transfers data to the additional known information input unit 1, additional unwanted-information input unit 2 or delete unwanted-information input unit 3.

The system can therefore easily work in cooperation with external system. Moreover, to work in cooperation with some other external systems, the system only needs to have additional logics in the operation-logic storage unit 52.

### [Fifth Embodiment]

Next, the fifth embodiment of the present invention will be described.

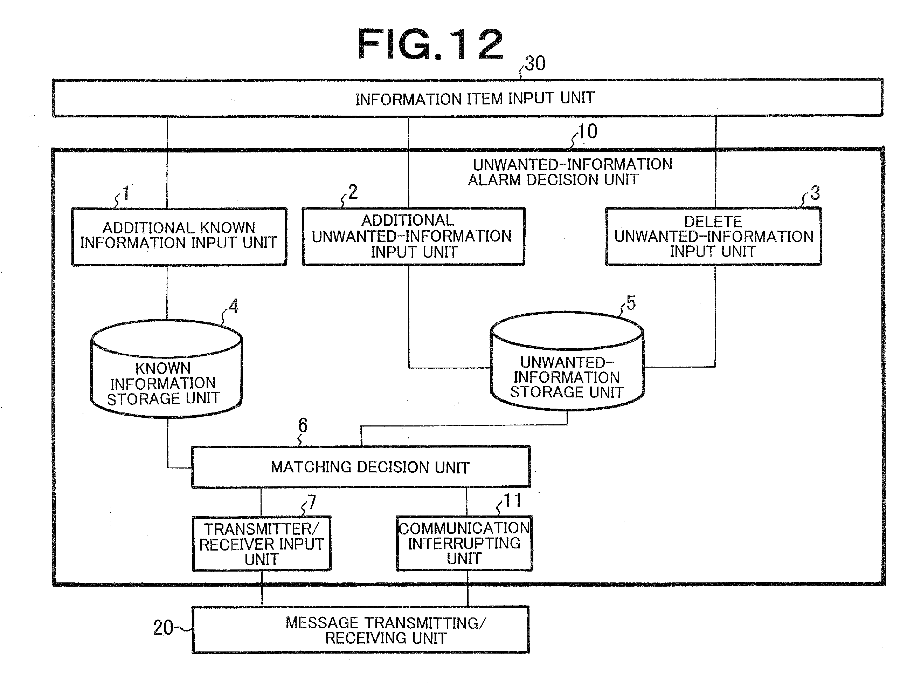

A system for avoiding notification of unwanted information according to this embodiment is characterized in that the alarm output unit 8 according to the above-described first embodiment interrupts communication including any unwanted information. As shown in FIG. 12, a communication interrupting unit 11 having a function for interrupting communication including any unwanted information may be used in place of the alarm output unit 8 shown in FIG. 1.

The communication interrupting unit 11 monitors any communication content received from a message sender or a message receiver. The communication interrupting unit 11 obtains the data from the matching decision unit 6, which shows whether the unwanted information matches the known information. If the decision (B) is affirmative, the unit 11 determines whether the communication content includes an information item matched with any information item stored in the unwanted-information storage unit 5. If the communication content includes such an information item, the unit 11 transmits a command to the message transmitting/receiving unit 20, instructing the unit 20 to interrupt the communication. Upon receipt of the command, the message transmitting/receiving unit 20 interrupts the communication. The unit 20 may display the interruption of communication.

Thus, any information item that the message receiver does not want to know is prevented from reaching the message receiver.

### [Sixth Embodiment]

Next, the sixth embodiment of the present invention will be described.

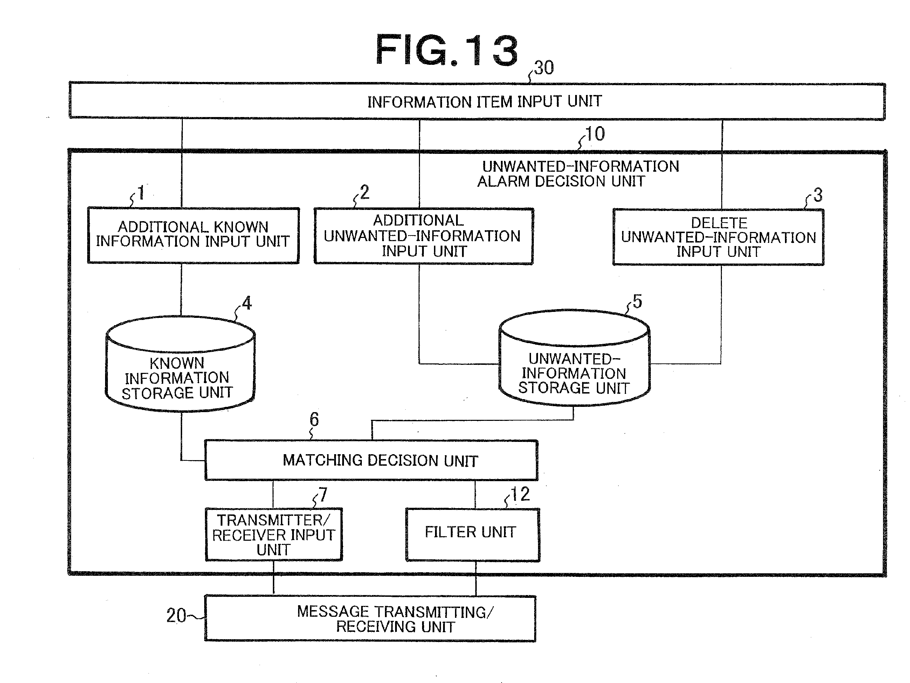

A system for avoiding notification of unwanted information according to this embodiment differs from the first embodiment in that an unwanted information item, if any in a communication content, is filtered out so that the message receiver cannot see the unwanted information. As shown in FIG. 13, a filter unit 12 that has the function of filtering the unwanted information item may be used in place of the alarm output unit 8 shown in FIG. 1.

The filter unit 12 monitors any communication content received from a message sender or a message receiver. The filter unit 12 obtains the data from the matching decision unit 6, which shows whether the unwanted information matched the known information. If the decision (B) is affirmative, the filter unit 12 determines whether the communication content includes an information item matches with any information item stored in the unwanted-information storage unit 5. If the communication content includes such an information item, the filter unit 12 deletes the information item or replaces it with particular characters, thus filtering the information item. Hence, the message receiver cannot see this information item.

Thus, any information item that the message receiver does not want to know is prevented from reaching the message receiver.

### [Seventh Embodiment]

Next, the seventh embodiment of the present invention will be described.

A system for avoiding notification of unwanted information according to this embodiment differs from a messaging system according to the first embodiment in that known information items are acquired from the message received from the message sender.

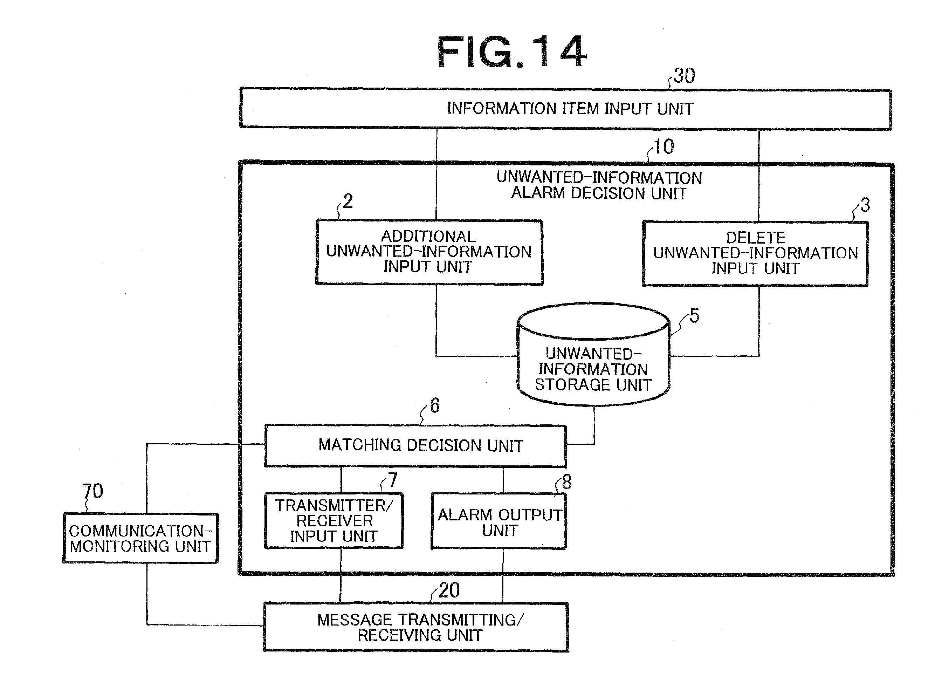

As shown in FIG. 14, a communication-monitoring unit 70 may replace the known information storage unit 4 and the additional known-information input unit 1, both shown in FIG. 1.

The communication-monitoring unit 70 monitors any message the message sender has transmitted. The unit 70 has the function of transferring the information in the message, as known information of the message sender, to the matching decision unit 6. The matching decision unit 6 acquires the known information of the message sender from the communication-monitoring unit 70, not from the known-information storage unit 4, when the unit 6 performs matching on the known information and unwanted information.

It will be explained how the present embodiment operates when User A sends an instant message to User B.

Assume that the unwanted-information storage unit 5 stores "World Cup" and "outcome", as unwanted information items of User B. Also assume that User A and User B have user identifiers User A and User B, respectively.

First, User A may transmit a message "Have you seen World Cup? Japan won two-one as we expected"

Then, the message transmitting/receiving unit 20 transfers the data showing that the message sender and the message receiver are User A and User B, respectively, to the transmitter/receiver input unit 7 before the message is sent to User B.

The matching decision unit 6 acquires the information known to the message sender, from the communication-monitoring unit 70.

The conununication-monitoring unit 70 performs a linguistic analysis on the message, extracting character strings "World Cup", "Japan", "won", "as we expected", and "two-one". The character strings are sent back to the matching decision unit 6.

The matching decision unit 6 determines that "World Cup" is a known information item that is known to User A and a unwanted information item that User B does not want to know.

From the matching decision unit 6, the alarm output unit 8 acquires the data showing that "World Cup" is an information item known to User A and that User B does not want this information item. The alarm output unit 8 generates a warning "The message form User A may include information that User B does not want". This alarm is sent to the message transmitting/receiving unit 20.

The message transmitting/receiving unit 20 displays the alarm on the message display menu of User B, before the message is delivered to User B. Seeing the alarm thus displayed, User B may decide whether he or she should have the message displayed or not.

### [Eighth Embodiment]

The eighth embodiment of the present invention will be described.

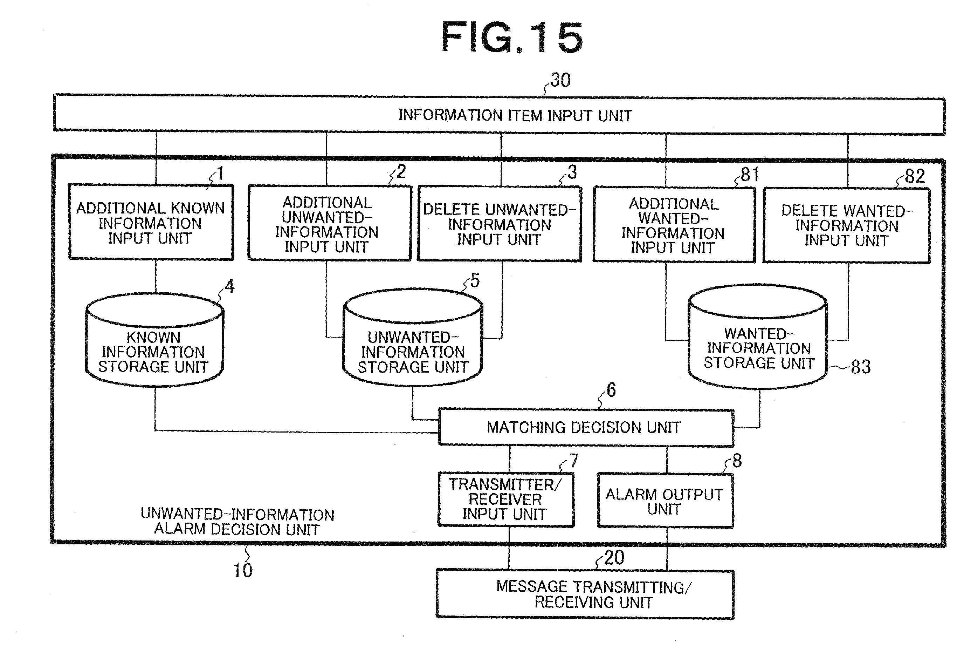

A system for avoiding notification of unwanted information according to this embodiment differs from the first embodiment in that not only unwanted information items, but also wanted information items are registered, the matching decision unit 6 performs matching on the wanted information items, as well. Note that "wanted information" means the information that the user wants to have. As shown in FIG. 15, the present embodiment may be added with, an additional wanted-information input unit 81, a delete wanted-information input unit 82, and a wanted-information storage unit 83.

The wanted-information storage unit 83 stores no data unit or at least one data unit composed of a user identifier and user's wanted information identified by the user identifier. The additional wanted-information input unit 81 has the function of receiving the data unit as an input and registering the same in the wanted-information storage unit 83. The delete wanted-information input unit 82 receives the user identifier and the user's wanted information identified by the identifier that the user wants to delete. The unit 82 searches the wanted-information storage unit 83 for the data unit of user identifier and wanted information. If the relevant data unit is found, the unit 82 deletes the relevant data unit from the wanted-information storage unit 83.

The matching decision unit 6 performs matching not only on unwanted information and known information to make the decision (A) or the decision (B). The unit 6 also performs matching on wanted information and known information, making a decision (C), or determining whether any information item in the wanted-information storage unit 83 for the message sender is identical to any known information item in the known information storage unit 4 for the message receiver, and making decision (D), or whether any information item in the known information storage unit 4 for the message sender is identical to any wanted information item in the wanted-information storage unit 83 for the message receiver. If any information item is found identical to any other information item compared, the matching decision unit 6 transfers to the alarm output unit 8 the identical information items and information showing in which decision, (A), (B), (C) or (D), the information items have been found identical.

The alarm output unit 8 receives information items from the matching decision unit 6. The unit 8 generates a proposal message showing that the message receiver knows which information item the message sender wants to know, if the information items are found identical in the decision (C). The unit 8 generates a proposal message showing that the message sender knows which information item the message receiver wants to know, if the information items are found identical in the decision (D). Reading either proposal message thus generated, the user can have more chances to express which information he or she wants.

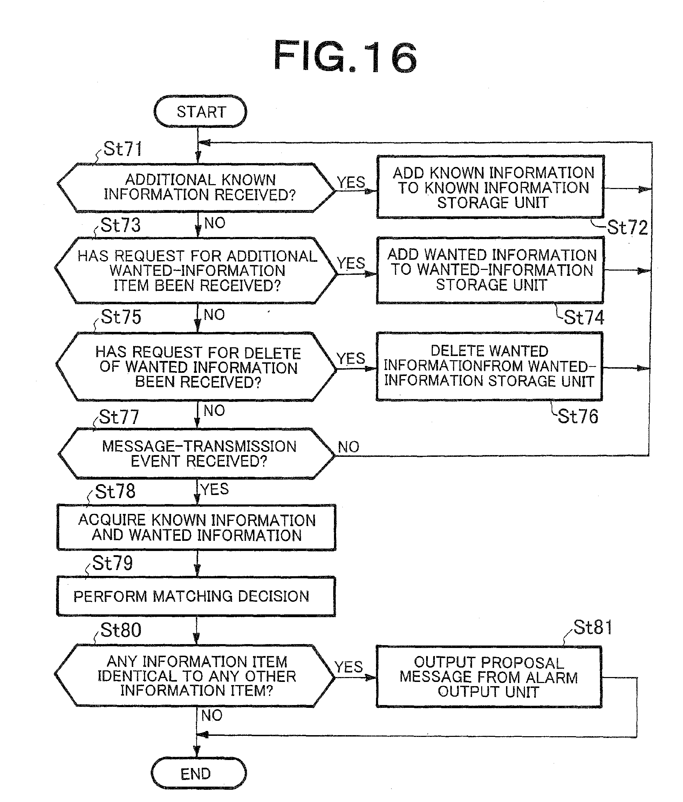

Next, how this embodiment operates will be explained with reference to the flowchart of FIG. 16.

The unwanted-information alarm decision unit 10 determines whether the known information item that the message sender or the message receiver wants to add has been received via the additional known information input unit 1 from the information item input unit 30 (Step St71). If this information item has received (YES), the unwanted-information alarm decision unit 10 registers the known information item in the known information storage unit 4 (Step St72). The operation then returns to Step St71.

If the known information item that should be added has not been received in Step St71 (NO), the unwanted-information alarm decision unit 10 determines whether a request for an information item to be added for the message sender or the message receiver has been received from the information item input unit 30 via the additional wanted-information input unit 81 (Step St73). If this request has been received (YES), the unwanted-information alarm decision unit 10 registers this wanted information item in the wanted-information storage unit 83 (Step St74). The operation then returns to Step St71.

If the request for the additional wanted information item has not been received in Step St73 (NO), the unwanted-information alarm decision unit 10 determines whether a request for the deletion of the information item for the message sender or the message receiver of the data has been received from the information item input unit 30 via the delete wanted-information input unit 82 (Step St75). If the request for the deletion of the information has been received (if YES), the unwanted-information alarm decision unit 10 deletes the information item from the wanted-information storage unit 83 (Step St76). The operation returns to Step St71.

If the request for the deletion of the information item has not been received in Step St75 (NO), the unwanted-information alarm decision unit 10 determines whether the message sender has operated the message transmitting/receiving unit 20, thus inputting a message-transmission event (Step St77). If the message-transmission event has not been received (NO), the operation returns to Step St71.

If the message-transmission event has been received in Step St77 (YES), the unwanted-information alarm decision unit 10 acquires the information item the message sender knows, from the known information storage unit 4, and the information the message receiver wants, from the wanted-information storage unit 83 (Step St78). The matching decision unit 6 makes the matching decision (C) and the matching decision (D), both described above (Step St79). That is, the unit 10 determines (C) whether any information item in the wanted-information storage unit 83 for the message sender is identical to any known information item in the known information storage unit 4 for the message receiver, and (D) determines whether any information item in the known information storage unit 4 for the message sender is identical to any wanted information item in the wanted-information storage unit 83 for the message receiver. These decisions are repeatedly performed, ultimately for all known information items and all wanted information items.

Then, the unwanted-information alarm decision unit 10 determines whether any information item is identical to any other information item by the above-described matching decision (Step St80). If YES, the alarm output unit 8 outputs a warning via the message transmitting/receiving unit 20 to the message sender and the message receiver (Step St81).

If the matching decision (C) is affirmative, the message receiver prepares and outputs a message showing that he or she knows the information item the message sender wants to have. If the matching decision (D) is affirmative, the message sender prepares and outputs a message showing that he or she knows the information item the message receiver wants to have. Reading the alarm message, the user can have more chances to express which information he or she wants.

### [Ninth Embodiment]

The ninth embodiment of the present invention will be described.

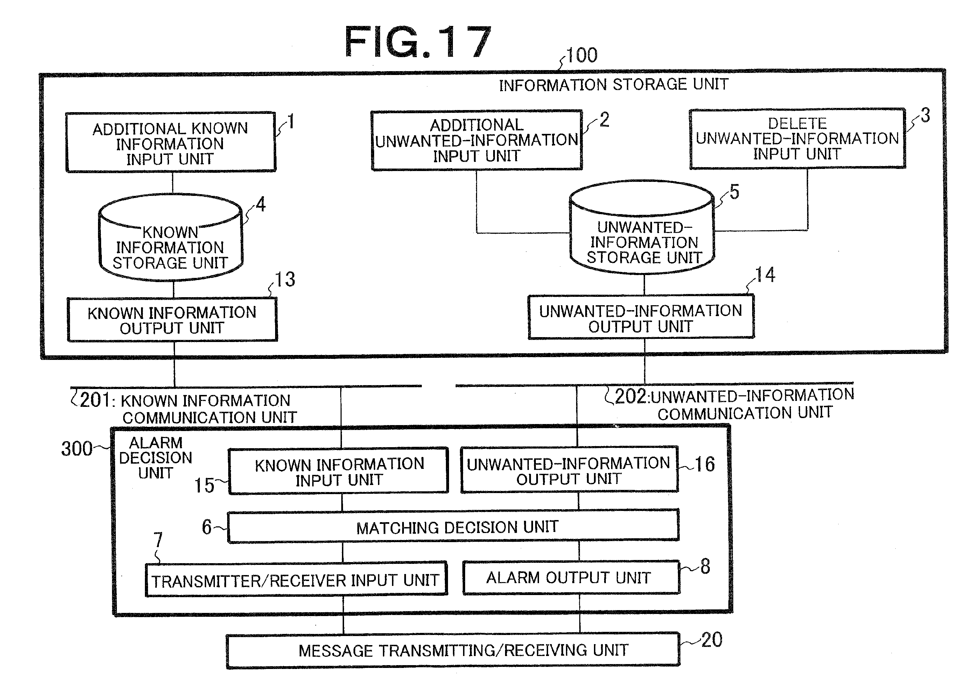

A system for avoiding notification of unwanted information according to this embodiment differs from the first embodiment in that two units perform the function of the unwanted-information alarm decision unit 10. In other words, the unit 10 is split into two components, one storing information and the other performing matching. As shown in FIG. 17, an information storage unit 100 and a warning decision unit 300 are used in place of the unwanted-information alarm decision unit 10 shown in FIG. 1. The alarm decision unit 300 may be configured as an independent apparatus.

The information storage unit 100 comprises a known information storage unit 4, an unwanted-information storage unit 5, an additional known information input unit 1, an additional unwanted-information input unit 2, and a delete unwanted-information input unit 3. In addition, the unit 100 has a known information output unit 13 and an unwanted-information output unit 14.

The alarm decision unit 300 comprises a matching decision unit 6, a transmitter/ receiver input unit 7, and a warning output unit 8. In addition, the unit 300 has a known information input unit 15 and an unwanted-information output unit 16.

The known information output unit 13 and the known information input unit 15 are connected to a known information communication unit 201. The unwanted-information output unit 14 and the unwanted-information output unit 16 are connected to an unwanted-information communication unit 202. The known information communication unit 201 can be connected to at least one known information output unit 13 and at least one known information input unit 15. The unwanted-information communication unit 202 can be connected to at least one unwanted-information output unit 14 and at least one unwanted-information output unit 16.

The matching decision unit 6 transfers the information about the message sender and message receiver to the known information input unit 15 to acquire information items that are known to the message sender and message receiver, and to the unwanted-information output unit 16 to acquire information items that the message sender and message receiver do not want.

It will be explained how the matching decision unit 6 acquires the information items known to the message sender (i.e. , User A). Note that User A has user identifier User A.

The matching decision unit 6 transfers the user identifier User A of the message sender (i.e., User A) to the known information input unit 15. The known information input unit 15 receives User A from the matching decision unit 6 and transmits User A to the known information output unit 13 connected to the known-information communication unit 201. The known information output unit 13 receives User A and searches the known information storage unit 4 for known information, by using User A as a key. If known information is retrieved from the unit 4, the unit 13 supplies the known information back to the known information input unit 15 via the knawn-information communication unit 201. The known information input unit 15 receives the known information and transfers the same to the matching decision unit 6.

The matching decision unit 6 acquires the information that the message sender does not want or the information that is known to the message receiver, in the same manner as explained above.

Thus, the unwanted-information storage unit 5 and the known-information storage unit 4 can be provided for each user. This secures the user's privacy. If each user has the unwanted-information storage unit 5 and the known-information storage unit 4, the identifier of the user need not be stored in the unwanted-information storage unit 5 or the known-information storage unit 4.

### [Tenth Embodiment]

The tenth embodiment of this invention will be described.

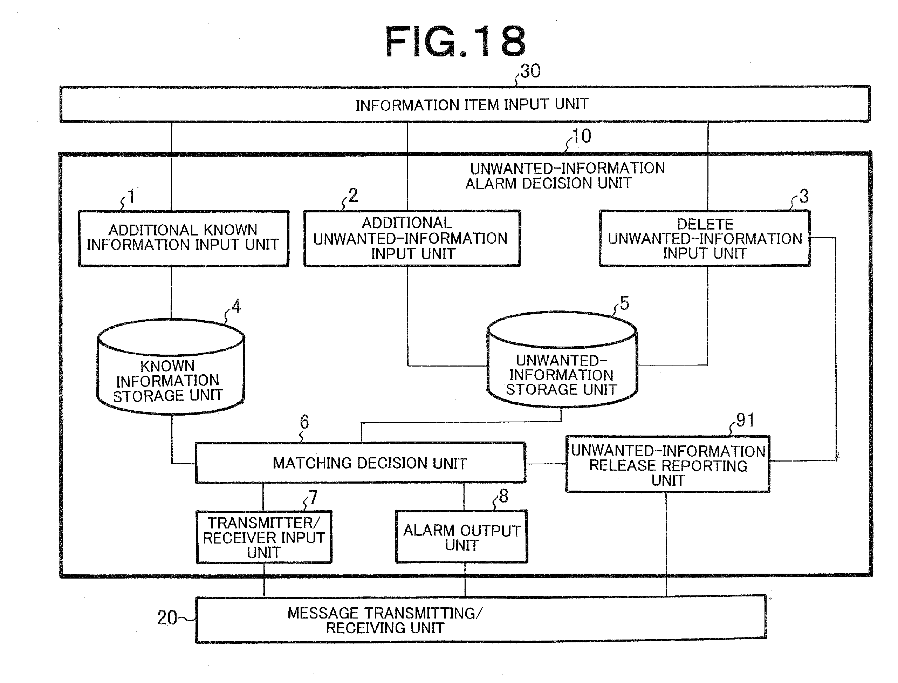

A system for avoiding notification of unwanted information according to this embodiment differs from the first embodiment in that when any unwanted information item is deleted, a message showing this fact is given to any user who knows the information item of the unwanted information. As shown in FIG. 18, an unwanted-information release reporting unit 91 may be used as an additional component.

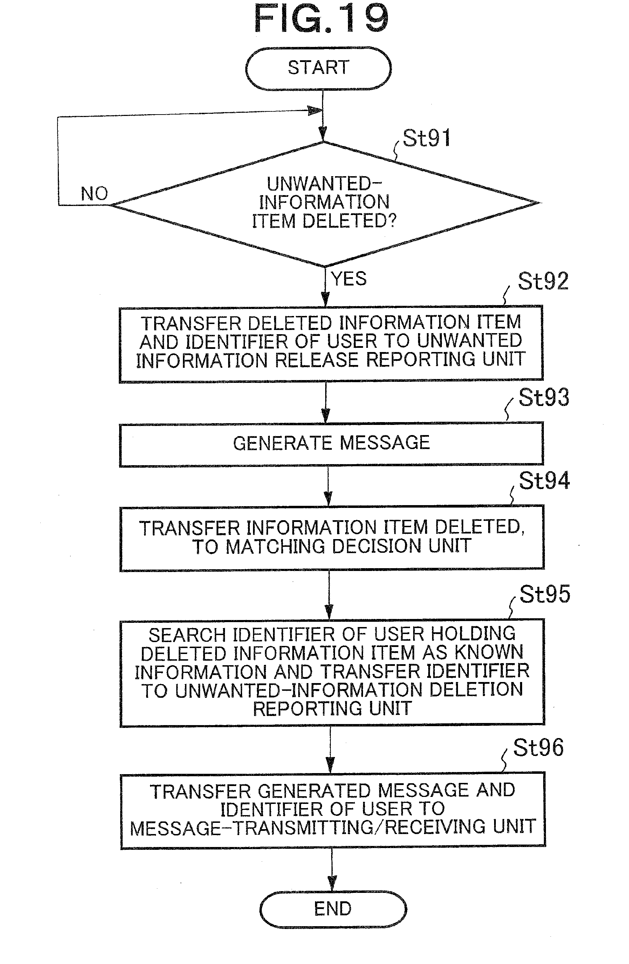

How the present embodiment operates will be explained with reference to FIG. 19.

Assume that an unwanted information item is deleted at the delete unwanted-information input unit 3 (Step St91). Then, the unit 4 transfers the information item deleted and the identifier of the user, to the unwanted-information release reporting unit 91 (Step St92). The unwanted-information release reporting unit 91 generates a message showing that the information item the user does not want has been deleted (Step St93). The unwanted-information release reporting unit 91 then transfers the information item deleted, to the matching decision unit 6, so that a user to whom the message should be displayed may be searched for (Step St94). The matching decision unit 6 makes a matching decision (E), or searches the known information storage unit 4 for the identifier of the user who has the deleted information item as a known information item. The unit 6 then transfers the identifier of the user, retrieved in making the matching decision (E), to the unwanted-information release reporting unit 91 (Step St95).

The unwanted-information release reporting unit 91 receives the identifier of the user from the matching decision unit 6 and transfers the message it has generated and the identifier of the user to whom the message should be displayed, to the message transmitting/receiving unit 20 (St96). Thus, the message transmitting/receiving unit 20 displays the message to the user to whom the message should be displayed

### [Eleventh Embodiment]

The eleventh embodiment of this invention will be described.

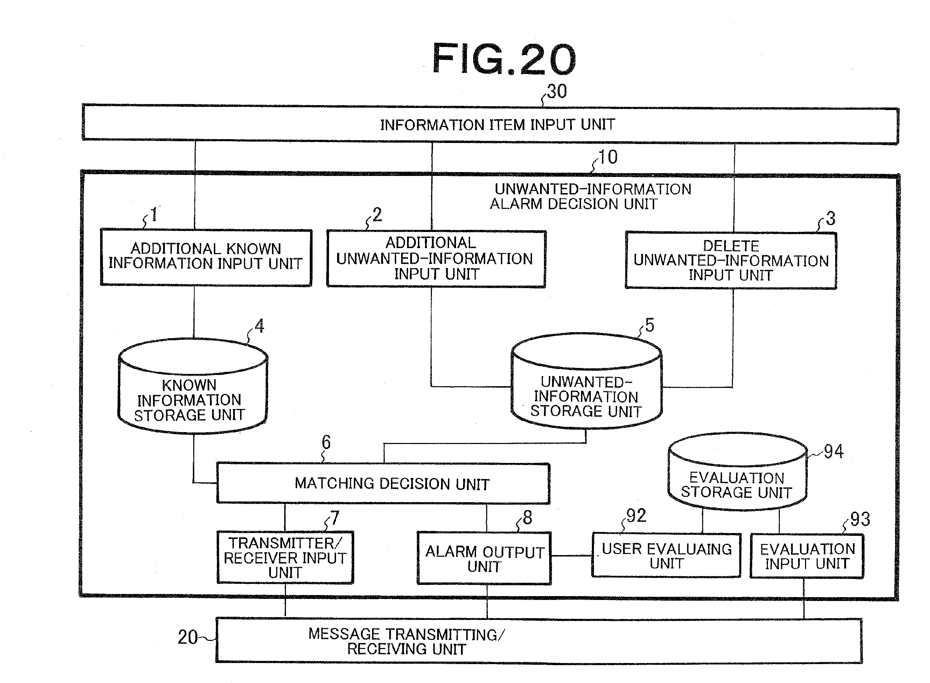

A system for avoiding notification of unwanted information according to this embodiment differs from the first embodiment in that a user evaluating function is added, whereby any user who makes unfriendly conducts is rejected. As shown in FIG. 20, a user evaluating unit 92, an evaluation input unit 93, and an evaluation storage unit 94 may be used as additional components.

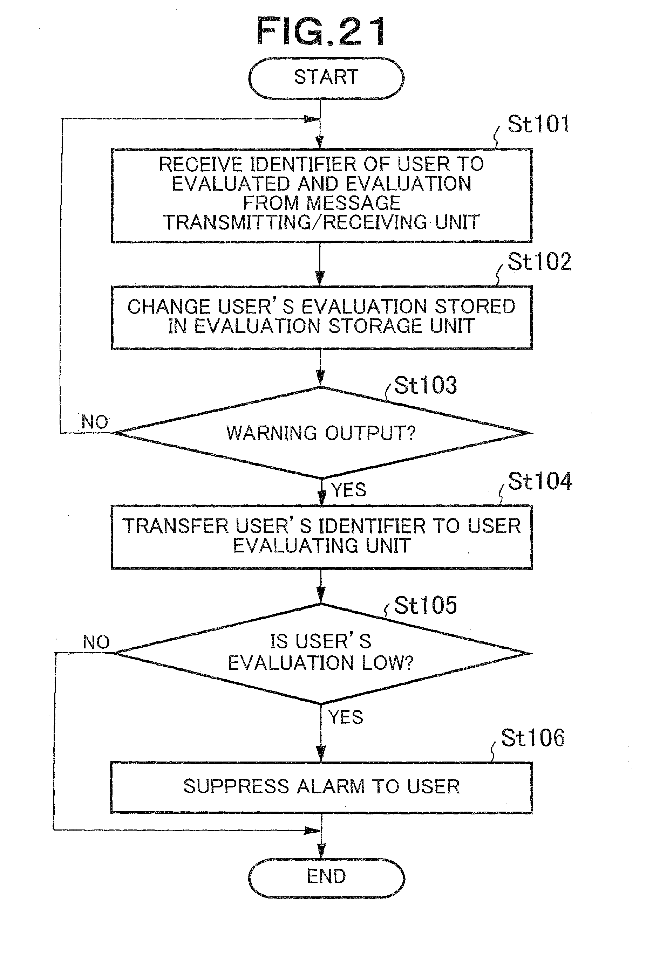

How this embodiment operates will be explained with reference to FIG. 21.

The evaluation input unit 93 receives the identifier of the user to evaluate and an instruction for raising or lowering the evaluation, from the message transmitting/receiving unit 20 (Step St101). Then, the unit 93 changes the user's evaluation stored in the evaluation storage unit 94 (Step St102).

Next, the alarm output unit 8 transfers, to the user evaluating unit 92, the identifier of the user to whom a warning should be given (Steps St103, St104). The user evaluating unit 92 acquires the user's evaluation, by using the user's identifier as a key. If the user's evaluation is low, the unit 92 gives the alarm output unit 8 the data showing that the user's evaluation is low (Step St105).

The alarm output unit 8 may receive the data showing that the user's evaluation is low from the user evaluating unit 92. In this case, the unit 8 suppresses the alarm to that user (Step St106).

While the user is exchanging messages with each other, a communication partner may give information items that the user does not want to know. In this case, the evaluation of this partner is lowered, and the evaluation of the other partners is raised because they do not give the user the information items the user does not want to know. The communication partner, who ignores the alarm and gives the user the information items the user does not want to know, is regarded as unfriendly. Then, alarms are no longer given to the unfriendly partner. This prevents the unfriendly partner from making unfriendly conducts.

The embodiments of the present invention have been described in detail. Nonetheless, the present invention is not limited to the exemplary embodiments described above. Anyone skilled in the art can make various changes and modifications on the basis of what is described in claims, without departing from the spirit and scope of this invention. Thus, such changes and modifications fall within the right claimed for the present invention.

For example, at least some of the functions of the system for avoiding notification of unwanted information according to each embodiment described above, may be performed by a processor (CPU) that operates under control of programs, memories (ROM/RAM) that have storage areas for storing the control programs, the control data and the like, various input/output devices (e. g. , external storage devices such as hard disk drives, communication devices such as modems and LAN interfaces, displays such as CRTs and liquid crystal displays, and peripheral devices such as input deices including a keyboard and a mouse) . In this case, the processor, the memories and the various input/output devices fall within the scope of the present invention.

Further, at least some of the functions of the system for avoiding notification of unwanted information according to each embodiment described above, may be implemented by program codes. In this case, the program codes and the recording media that hold these codes fall within the scope of the present invention. The program codes include program codes that cooperate with operating systems and some other application software items to implement the above-mentioned functions. The recording media may be flexible disks, optical disks, magneto-optical disks, CD-ROMs, magnetic tape, nonvolatile memory cards, as well as the above-mentioned hard disk drives and ROMs.

The present invention can be applied to HDD recorders, movie-ticket sales systems, instant-messenger systems, chat systems, mail systems, rich-site summary (RSS) readers, news displaying systems on the Web, and the like.

## Claims

1. A system for avoiding notification of unwanted information, comprising:
unwanted-information storage means for storing unwanted information items that a user does not want to know, in association with the user;
known information storage means for storing known information items that a user has already known, in association with the user; and
alarm means for finding a communication partner who knows an information item that a user does not want to know, on the basis of the known information items stored in the known information storage means and the unwanted information items stored in the unwanted-information storage means, and for giving a warning to the user.

2. A system for avoiding notification of unwanted information, comprising:
unwanted-information storage means for storing unwanted information items that a user does not want to know, in association with the user;
known information storage means for storing known information items that a user has already known, in association with the user; and
alarm means for finding a communication partner who declines to receive an information item that a user has, on the basis of the known information items stored in the known information storage means and the unwanted information items stored in the unwanted-information storage means, and for giving a warning to the user.

3. A system for avoiding notification of unwanted information, comprising:
unwanted-information storage means for storing unwanted information items that a user does not want to know, in association with the user;
known information storage means for storing known information items that a user has already known, in association with the user; and
alarm means for finding a communication partner who knows an information item that a user does not want to know, a communication partner who declines to receive an information item that the user has, on the basis of the known information items stored in the known information storage means and the unwanted information items stored in the unwanted-information storage means, and for giving a warning to the user.

4. The system according to Claim 1, 2, or 3, wherein the alarm means has matching decision means for performing a matching process on the known information items stored in the known information storage means and the unwanted information items stored in the unwanted-information storage means.

5. The system according to claim 4, further comprising processing means for acquiring the known information items and the unwanted information items from an external system.

6. The system according to claim 5, wherein the external system is a video-data processing system that has a video-data recording unit, and the processing means has means for adding information recorded by the video-data recording unit, as unwanted information, to the unwanted-information storage means in cooperation with the video-data processing system.

7. The system according to claim 5 or 6, wherein the external system is a video-data processing system that has a video-data playback unit, and the processing means has means for deleting information played back by the video-data playback unit from the unwanted information stored in the unwanted-information storage means and for adding the information to the known information storage means, in cooperation with the video-data processing system.

8. The system according to claim 5, 6 or 7, wherein the external system is a video-data processing system that has a video-data deleting unit, and the processing means has means for deleting information related to video data from the unwanted information stored in the unwanted-information storage means, in cooperation with the video-data processing system when the video data is deleted by the video-data deleting unit.

9. The system according to claim 5, wherein the external system is a movie-ticket sales system, and the processing means has means for adding the title of a movie for which a ticket has been purchased, as an unwanted information item, to the unwanted-information storage means, in cooperation with the movie-ticket sales system.

10. The system according to claim 5, wherein the external system is a movie theater admission system that has a movie-viewing unit, and the processing means has means for deleting the title of a movie viewed at the movie-viewing unit from the unwanted information stored in the unwanted-information storage means and for adding the title of the movie, as unwanted information, to the known-information storage means, in cooperation with the movie theater admission system.

11. The system according to any one of claims 1 to 10, wherein the alarm means has means for giving the warning to the user when the user starts communication.

12. The system according to claim 11, wherein the alarm means has means for notifying a user that the alarm given to the user is invalid when the alarm becomes invalid.

13. A system for avoiding notification of unwanted information, comprising:
unwanted-information storage means for storing unwanted information items that a user does not want to know, in association with the user;
known-information analyzing means for analyzing known information items that a user has already known, on the basis of a communication content; and
communication interrupting means for determining communication content knowing an unwanted information item that a user does not want to known, on the basis of the unwanted information items stored in the unwanted-information storage means and the communication content analyzed by the known information analyzing means, and for interrupting the communication content.

14. The system according to claim 13, wherein the communication interrupting means has means for giving a warning to the user when the user starts the communication.

15. The system according to claim 13, wherein the communication interrupting means has means for establishing no communication with the user.

16. The system according to claim 13, 14 or 15, wherein the communication interrupting means has means for deleting the unwanted information from the communication content.

17. The system according to claims 13, 14 or 15, wherein the communication interrupting means has means for replacing the unwanted information items contained in the communication contents, with another information item.

18. The system according to any one of claims 13 to 17, wherein the communication interrupting means has means for prompting the user, who has received the alarm, to decide what action to take.

19. A warning information decision apparatus, comprising:
means for referring to unwanted-information storage means for storing unwanted information items that a user does not want to know in association with the user and known information storage means for storing known information items that a user has already known, in association with the user, both the unwanted-information storage means and the known information storage means being provided outside the apparatus; and
alarm means for finding a communication partner who knows an information item that a user does not want to know, on the basis of the known information items stored in the known information storage means and the unwanted information items stored in the unwanted-information storage means, and for giving a warning to the user.

20. A method for avoiding notification of unwanted information, comprising the steps of:
storing unwanted information items that a user does not want to know, in association with the user, into an unwanted-information storage unit;
storing known information items that a user has already known, in association with the user, into a known information storage unit; and
finding a communication partner who knows an information item that a user does not want to know, on the basis of the known information items stored in the known information storage unit and the unwanted information items stored in the unwanted-information storage unit, and giving a warning to the user.

21. A method for avoiding notification of unwanted information, comprising the steps of:
storing unwanted information items that a user does not want to know, in association with the user, into an unwanted-information storage unit;
storing known information items that a user has already known, in association with the user, into a known information storage unit; and
finding a communication partner who declines to receive an information item that a user has, on the basis of the known information items stored in the known information storage unit and the unwanted information items stored in the unwanted-information storage unit, and giving a warning to the user.

22. A method for avoiding notification of unwanted information, comprising the steps of:
storing unwanted information items that a user does not want to know, in association with the user, into an unwanted-information storage unit;
storing known information items that a user has already known, in association with the user, into a known information storage unit; and
finding a communication partner who knows an information item that a user does not want to know, a communication partner who declines to receive an information item that the user has, on the basis of the known information items stored in the known information storage unit and the unwanted information items stored in the unwanted-information storage unit, and giving a warning to the user.

23. A method for avoiding notification of unwanted information, comprising the steps of:
storing unwanted information items that a user does not want to know, in association with the user, into an unwanted-information storage unit;
analyzing known information items that a user has already known, on the basis of a communication content; and
determining communication content knowing an unwanted information item that a user does not want to known, on the basis of the unwanted information items stored in the unwanted-information storage unit and the communication content analyzed, and interrupting the communication content.

24. A warning information decision method, comprising the steps of the steps of:
referring to unwanted-information storage means for storing unwanted information items that a user does not want to know in association with the user and known information storage means for storing known information items that a user has already known, in association with the user, both the unwanted-information storage means and the known information storage means being provided outside the apparatus; and
finding a communication partner who knows an information item that a user does not want to know, on the basis of the known information items stored in the known information storage means and the unwanted information items stored in the unwanted-information storage means, and giving a warning to the user.

25. A program for causing a computer to execute a method for avoiding notification of unwanted information, the method comprising the steps of:
storing unwanted information items that a user does not want to know, in association with the user, into an unwanted-information storage unit;
storing known information items that a user has already known, in association with the user, into a known information storage unit; and
finding a communication partner who knows an information item that a user does not want to know, on the basis of the known information items stored in the known information storage unit and the unwanted information items stored in the unwanted-information storage unit, and giving a warning to the user.

26. A program for causing a computer to execute a method for avoiding notification of unwanted information, the method comprising the steps of:
storing unwanted information items that a user does not want to know, in association with the user, into an unwanted-information storage unit;
storing known information items that a user has already known, in association with the user, into a known information storage unit; and
finding a communication partner who declines to receive an information item that a user has, on the basis of the known information items stored in the known information storage unit and the unwanted information items stored in the unwanted-information storage unit, and giving a warning to the user.

27. A program for causing a computer to execute a method for avoiding notification of unwanted information, the method comprising the steps of:
storing unwanted information items that a user does not want to know, in association with the user, into an unwanted-information storage unit;
storing known information items that a user has already known, in association with the user, into a known information storage unit; and
finding a communication partner who knows an information item that a user does not want to know, a communication partner who declines to receive an information item that the user has, on the basis of the known information items stored in the known information storage unit and the unwanted information items stored in the unwanted-information storage unit, and giving a warning to the user.

28. A program for causing a computer to execute a method for avoiding notification of unwanted information, the method comprising the steps of:
storing unwanted information items that a user does not want to know, in association with the user, into an unwanted-information storage unit;
analyzing known information items that a user has already known, on the basis of a communication content; and
determining communication content knowing an unwanted information item that a user does not want to known, on the basis of the unwanted information items stored in the unwanted-information storage unit and the communication content analyzed, and interrupting the communication content.

29. A warning information decision program for causing a computer to execute a method comprising the steps of:
referring to unwanted-information storage means for storing unwanted information items that a user does not want to know in association with the user and known information storage means for storing known information items that a user has already known, in association with the user, both the unwanted-information storage means and the known information storage means being provided outside the apparatus; and
finding a communication partner who knows an information item that a user does not want to know, on the basis of the known information items stored in the known information storage means and the unwanted information items stored in the unwanted-information storage means, and giving a warning to the user.
